# DEMANDE DE BREVET EUROPEEN

(11) **EP 4 280 642 A1**
(43) Date de publication de la demande: **22.11.2023**
(21) Numéro de dépôt: 23172929.4
(22) Date de dépôt: 11.05.2023
(51) Int. Cl.: H04W 8/00, H04W 4/02, H04W 4/10, H04W 64/00, H04W 84/08, H04W 92/02

(54) **PROCÉDÉ DE FOURNITURE DE SERVICES GÉOGRAPHIQUES À UN RÉSEAU HYBRIDE COMPRENANT DES RÉSEAUX 3GPP MCS ET PMR**

(30) Priorité: 20.05.2022 FR 2204880
(71) Demandeur: Airbus DS SLC, 78990 Elancourt (FR)
(72) Inventeur: Paterour, Olivier, 78990 Elancourt (FR); Piroard, François, 78990 Elancourt (FR)
(74) Mandataire: Cabinet Camus Lebkiri

(57) **Abrégé**

Un aspect de l'invention concerne un procédé (2) de fourniture de services géographiques dans un système (1) comprenant une pluralité de dispositifs utilisateurs (UPMR1, UMCX1, UMCX2, UMCX3, ... UMCXN) et :
- un premier réseau 3GPP MCS (RMCX1) comprenant au moins un premier dispositif utilisateur (UMCX1) et au moins un serveur (SMCX1), le serveur (SMCX1) comprenant au moins un module de services géographiques (121,122),
- un deuxième réseau PMR (RPMR1) comprenant au moins un deuxième dispositif utilisateur (UPMR1),
- un module d'interconnexion de réseaux (IWF) reliant le premier réseau (RMCX1) et le deuxième réseau (RPMR1),
le module géographique étant configuré pour déterminer (23) des dispositifs utilisateurs concernés par le service requis en fonction de la configuration organisationnelle, de la configuration géographique et d'une position géographique de chaque dispositif utilisateur géré par le serveur (SMCX1) pour que le serveur annonce le service aux dispositifs utilisateurs qu'il gère.

## Description

### DOMAINE TECHNIQUE DE L'INVENTION

Le domaine technique de l'invention est celui des réseaux de communication et plus particulièrement celui des réseaux de communication selon le standard 3GPP MCS.

La présente invention concerne un procédé de fourniture de services géographiques à un réseau hybride comprenant des réseaux 3GPP MCS et PMR, et en particulier dans lequel un réseau comprend un module de services géographiques permettant à des dispositifs utilisateurs du réseau 3GPP MCS de disposer de services liés à leur position.

### ARRIERE-PLAN TECHNOLOGIQUE DE L'INVENTION

Les normes de radiocommunication PMR (selon la dénomination anglo-saxonne « Professional Mobile Radio » pour « Radio Mobile Professionnelle ») TETRAPOL^{®}, TETRA^{®} ou encore P25^{®} mettent en oeuvre des serveurs qui permettent d'annoncer la disponibilité d'un ou plusieurs services à des équipements utilisateurs lorsqu'ils sont situés dans une certaine zone, ou lorsqu'ils entrent dans une certaine zone. Ces annonces localisées sont réalisées via la couverture radio de stations de base du réseau : lorsque l'on souhaite annoncer qu'un service est disponible à un utilisateur situé à une certaine localisation, il suffit d'envoyer un message de signalisation à une station de base couvrant cette localisation, qui le diffuse aux équipements utilisateurs dans la zone radio qu'elle couvre. Ces communications utilisent un canal radio de contrôle permettant de faire de la signalisation radio.

Un équipement utilisateur recevant un message de signalisation dispose d'une intelligence embarquée et peut alors décider s'il est capable d'utiliser le service annoncé et/ou s'il y est autorisé grâce à des paramètres joints au message de signalisation. Il est ainsi par exemple possible de limiter l'accès aux communications d'un groupe à une zone géographique. L'utilisateur devra préalablement s'être attaché (TETRA^{®}) ou affilié (P25^{®}) au groupe considéré, indépendamment de sa position géographique. Il n'est alors pas notifié de la mise en oeuvre du groupe, mais de son activation, par exemple par réception de media sur ce groupe.

Ces réseaux évoluent vers une prise en charge d'échanges en large bande. Le standard 3GPP régissant les réseaux mobiles de type « GSM » selon la dénomination anglo-saxonne « Global System for Mobile Communications », notamment dans leurs troisième, quatrième et cinquième générations respectivement appelées « 3G », « 4G » et « 5G », et générations suivantes, et plus particulièrement dans les déploiements faisant appel à des services de communications critiques définis par le 3GPP appelés « MCS » selon la dénomination anglo-saxonne « Mission Critical Services » permet ces échanges sécurisés en large bande. Un réseau 3G, 4G ou 5G met en oeuvre un équipement terminal 3G/4G/5G (appelé UE de l'anglais « User Equipement »), un réseau d'accès radio RAN (de l'anglais « Radio Access Network ») 3G/4G/5G et un coeur de réseau (3G/4G/5G). Les déploiements des services MCS en large bande ne se limitent bien entendu pas aux réseaux mobiles 3G/4G/5G mais incluent aussi des déploiements dans des réseaux IP (de l'anglais « Internet Protocol ») fixes et mobiles, par exemple des WLAN, de l'anglais « Wide Local Area Network ».

On entend par « réseau de communication selon le standard 3GPP MCS », un réseau de communication compatible avec le standard 3GPP MCS et plus particulièrement avec la version actuelle du 3GPP qui est la version 17, avec les versions précédentes à partir de la version 13 et avec les versions suivantes intégrant toutes les caractéristiques de l'invention.

Dans le standard 3GPP MCS, les services de communication suivants sont définis :
- MCPTT, de l'anglais « Mission Critical Push To Talk » pour « Appuyer Pour Parler en Mission Critique » en français, qui permet de réaliser des communications voix,
- MCVideo, qui permet de réaliser des communications vidéo,
- MCData, qui comprend trois sous-services :
- SDS de l'anglais « Short Data Service » pour « Service de données courtes » en français et
- FD de l'anglais « File Distribution » pour « Distribution de fichier » en français,
- IPCon de l'anglais « IP Connectivity » pour « Connectivité IP » en français.

Par la suite, par « serveur MCX », on fera référence à un serveur du réseau configuré pour mettre en oeuvre tout service de communication du 3GPP MCS, c'est-à-dire MCPTT, MCData ou MCVideo.

Dans le standard 3GPP MCS, des annonces dépendant d'un paramètre géographique sont possibles. Ce paramètre géographique est défini pour un utilisateur d'une entité cliente du réseau et est compris dans un document relatif à l'utilisateur, stocké par une base de données utilisateurs du réseau et récupéré par chaque serveur du réseau gérant les communications liées à cet utilisateur. Dans le cas d'une affiliation à un groupe en fonction de la position du dispositif utilisateur, c'est le dispositif utilisateur qui prend la décision de s'affilier en connaissant son positionnement.

Dans l'objectif de proposer des services liés à un critère géographique, aussi dits « services géographiques », il est nécessaire de ne plus dépendre du choix du dispositif utilisateur pour accepter ou refuser un service, mais de ne pouvoir annoncer un service géographique qu'à des dispositifs utilisateurs respectant le critère géographique.

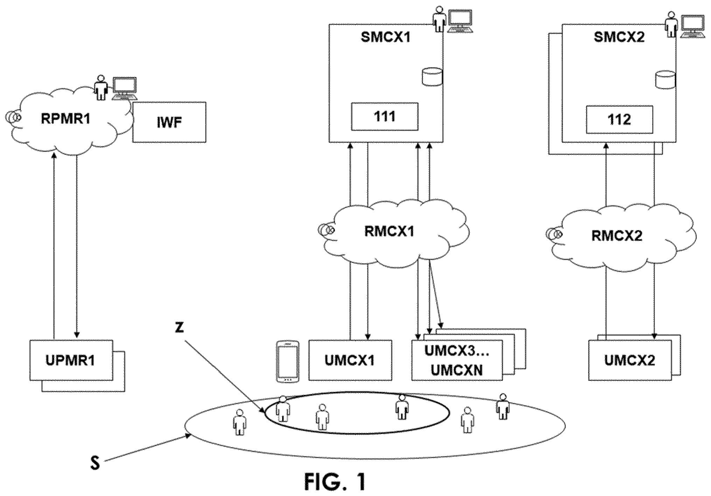

La Figure 1 montre une représentation schématique d'un système dans lequel on souhaite utiliser des services géographiques.

Le système de la Figure 1 comprend trois réseaux : un réseau PMR, c'est-à-dire fonctionnant selon la norme PMR de Radio Mobile Professionnelle, appelé RPMR1 et deux réseaux 3GPP MCS appelés RMCX1 et RMCX2 respectivement.

Les deux réseaux 3GPP MCS comprennent chacun un serveur SMCX1 et SMCX2 respectivement. Ces serveurs sont des serveurs MCX, c'est-à-dire, comme indiqué précédemment, qu'ils permettent de fournir des services du standard 3GPP MCS à des dispositifs utilisateurs. Pour cela, ils implémentent une fonction de fourniture de services 111 et 112 respectivement. Les dispositifs utilisateurs compris dans ces deux réseaux 3GPP MCS sont appelés UMCX1 et UMCX3 à UMCXN pour le premier réseau RMCX1, et UMCX2 pour le deuxième réseau RMCX2.

Le réseau PMR est interconnecté avec le premier réseau RMCX1 par un module d'interconnexion connu appelé IWF, de l'anglais « interworking function » pour « fonction d'interconnexion », définie par la spécification technique TS 23.283 du 3GPP. Cette fonction d'interconnexion peut être implémentée par un serveur réalisant l'interconnexion entre les deux réseaux RPMR1 et RMCX1. Par la suite, on confondra « module » et « fonction » d'interconnexion, un module d'interconnexion étant un module logiciel mis en oeuvre par un ordinateur et une fonction d'interconnexion regroupant l'ensemble des actions résultant de l'exécution de ce module logiciel par l'ordinateur.

Le réseau PMR RPMR1 comprend au moins une station de base (non représentée) et une pluralité de dispositifs utilisateurs, dont seul un est représenté pour plus de concision, nommé UPMR1. Pour communiquer au sein du réseau PMR, le dispositif utilisateur UPMR1 émet vers la station de base une demande d'allocation de canal de communication, puis communique sur ce canal. Pour communiquer vers un autre réseau 3GPP MCS, la communication passe par le module d'interconnexion IWF, qui traduit les requêtes et communications entre le réseau PMR et un ou plusieurs réseaux 3GPP MCS.

Pour qu'un dispositif utilisateur UMCX1 à UMCXN communique au sein de son réseau 3GPP MCS, il émet une requête au serveur SMCX1 ou SMCX2 en fonction de son appartenance, qui met alors en oeuvre le service de communication demandé. De la même manière, pour atteindre des dispositifs utilisateurs du réseau PMR, une requête est émise par le serveur du réseau 3GPP MCS via le module d'interconnexion IWF vers le réseau PMR.

Les utilisateurs des dispositifs utilisateurs UMCX1 à UMCXN et UPMR1 sont représentés dans une région S, cette région étant servie à la fois par une ou plusieurs stations de base du réseau PMR RPMR1, et par un ou plusieurs serveurs des réseaux RMCX1 et RMCX2. Dans cette région, une zone géographique z est définie, par exemple par un critère géographique. Il n'est actuellement pas possible pour un utilisateur utilisant un dispositif utilisateur d'un quelconque des types de réseaux du système d'utiliser un service géographique mettant en oeuvre à la fois des dispositifs utilisateurs du réseau PMR et des dispositifs utilisateurs du ou des réseaux 3GPP MCS. De la même manière, il n'est actuellement pas possible d'annoncer à un utilisateur ou pour un utilisateur d'utiliser un service regroupant des utilisateurs de plusieurs entités organisationnelles en fonction d'un critère géographique, par exemple des utilisateurs de métiers différents ou d'organisations différentes ou de niveaux de hiérarchies différents.

Il existe donc un besoin d'informer, et au besoin d'inclure dans une communication de groupe de type 3GPP MCX, l'ensemble des dispositifs utilisateurs présents dans un périmètre géographique donné, par exemple défini autour d'un utilisateur donné émetteur d'une requête de service. Il est aussi nécessaire de pouvoir informer un dispositif utilisateur de la disponibilité d'un service géographique quels que soit l'organisation et le serveur MCX en charge des utilisateurs MCX présents dans le périmètre géographique. Par ailleurs, il existe un besoin de pouvoir inclure des utilisateurs de technologies PMR via le module d'interconnexion dans l'utilisation d'un tel service géographique.

Un exemple de service recherché est celui d'un utilisateur MCX d'une force de sécurité ou de secours émettant un appel de détresse incluant sa position géographique. L'ensemble des utilisateurs MCX (force de sécurité et de secours) présents dans un périmètre géographique défini autour de l'utilisateur MCX à l'initiative de la requête de détresse ont besoin d'être informés et, au besoin, inclus dans une communication de groupe, quels que soient leur organisation d'appartenance, les serveurs MCX auxquels ils sont rattachés, et quelle que soit la technologie de communication qu'ils utilisent (PMR ou 3GPP MCS).

Avec le découplage complet entre la couche connectivité apportée par les réseaux mobiles IP (3G/4G/5G, WLAN), maitrisant la couverture radio et la couche services de communications de groupes de type MCX déployée au-dessus de ces mêmes réseaux opérateurs (MNO, MVNO, public, privés), il est nécessaire de maîtriser complètement et en temps réel les informations qui permettent de répondre à ce besoin.

### RESUME DE L'INVENTION

L'invention offre une solution aux problèmes évoqués précédemment, en proposant l'utilisation d'un module géographique dans les serveurs 3GPP MCS.

Un aspect de l'invention concerne un procédé de fourniture de services géographiques dans un système comprenant au moins une pluralité de dispositifs utilisateurs et :
- un premier réseau selon le standard 3GPP MCS « 3rd Génération Partnership Project Mission Critical Services » comprenant au moins un premier dispositif utilisateur de la pluralité de dispositifs utilisateurs et au moins un serveur, le serveur comprenant au moins un module de services géographiques,
- un deuxième réseau PMR « Professional Mobile Radio » comprenant au moins un deuxième dispositif utilisateur de la pluralité de dispositifs utilisateurs,
- un module d'interconnexion de réseaux reliant le premier réseau via le serveur avec le deuxième réseau implémentant une fonction d'interconnexion de réseau traduisant les requêtes entre le premier réseau et le deuxième réseau,

Le procédé comprenant au moins les étapes de :
- Transmission, par un dispositif utilisateur de la pluralité de dispositifs utilisateurs au premier serveur, d'au moins une requête de service géographique comprenant la position géographique du dispositif utilisateur,
- Récupération, par le serveur, d'une configuration organisationnelle et d'une configuration géographique en fonction du service requis,
- Détermination, par le module de services géographiques du serveur, des dispositifs utilisateurs concernés par le service requis en fonction de la configuration organisationnelle, de la configuration géographique et d'une position géographique de chaque dispositif utilisateur géré par le serveur,
- Transmission, par le serveur à chaque autre réseau interconnecté au premier réseau et auquel n'appartient pas le dispositif utilisateur ayant transmis la requête de service géographique, de la requête de service géographique et de la configuration géographique,
- Annonce du service requis à chaque dispositif utilisateur dont la position géographique est comprise dans une zone géographique définie par la configuration géographique.

Grâce à l'invention, il est possible de proposer, dans un système comprenant des réseaux de différents types et en particulier des réseaux de type PMR et selon le standard 3GPP MCS, des services géographiques pour des dispositifs utilisateurs appartenant à ces réseaux de différents types.

L'invention a l'avantage de pouvoir inclure dans un service MCX des dispositifs utilisateurs respectant un critère géographique mais appartenant à des organisations différentes, gérés par des serveurs MCX différents, et/ou appartenant à des réseaux de types différents.

Outre les caractéristiques qui viennent d'être évoquées dans le paragraphe précédent, le procédé selon un aspect de l'invention peut présenter une ou plusieurs caractéristiques complémentaires parmi les suivantes, considérées individuellement ou selon toutes les combinaisons techniquement possibles :
- la transmission, par un dispositif utilisateur de la pluralité de dispositifs utilisateurs au premier serveur , d'au moins une requête de service géographique comprenant la position géographique du premier dispositif utilisateur est réalisée :
   - Pour un réseau selon le standard 3GPP MCS interconnecté au premier réseau, via le serveur du réseau interconnecté,
   - Pour un réseau PMR interconnecté au premier réseau, via le module d'interconnexion.
- la détermination, par le module de services géographiques, des dispositifs utilisateurs concernés par le service requis, comprend :
   - la comparaison d'une position géographique de chaque dispositif utilisateur stockée par le serveur avec la configuration géographique et
   - la comparaison d'une appartenance à une organisation de chaque dispositif utilisateur stockée par le serveur avec la configuration organisationnelle liée au service requis.
- au moins un troisième réseau est interconnecté au premier réseau, le troisième réseau étant un réseau selon le standard 3GPP MCS et comprenant au moins un deuxième serveur comprenant au moins un deuxième module de services géographiques et au moins un troisième dispositif utilisateur.
- une étape préalable de transmission périodique, par chaque dispositif utilisateur de chaque réseau 3GPP MCS, au serveur du réseau 3GPP MCS, d'au moins une position géographique du dispositif utilisateur.
- le service géographique est choisi au moins parmi les services de : communication de groupe de type voix, vidéo et/ou de données, communication « appuyer pour parler », communication vidéo, communication texte, message de détresse, appel de groupe d'urgence.
- la transmission, par le serveur à chaque autre réseau interconnecté au premier réseau, de la requête de service géographique et de la configuration géographique, est réalisée via au moins un groupe de communication dédié entre le serveur du premier réseau et :
   - Pour un réseau selon le standard 3GPP MCS interconnecté, le serveur du réseau interconnecté,
   - Pour un réseau PMR interconnecté, le module d'interconnexion.
- l'annonce du service est réalisée :
   - par une station de base de chaque réseau PMR servant la zone géographique, aux dispositifs utilisateurs présents dans la zone géographique et
   - par le serveur de chaque réseau selon le standard 3GPP MCS, aux dispositifs utilisateurs déterminés par le module de services géographiques.
- la récupération de la configuration organisationnelle et de la configuration géographique en fonction du service requis comprend :
   - l'envoi d'une requête, par le serveur, à une base de données, la requête comprenant le service requis,
   - la réception, par le serveur, de la configuration organisationnelle et de la configuration géographique.

Selon un deuxième aspect de l'invention, il est proposé un système configuré pour mettre en oeuvre le procédé selon l'invention, le système comprenant au moins une pluralité de dispositifs utilisateurs et :
- un premier réseau selon le standard 3GPP MCS « 3rd Génération Partnership Project Mission Critical Services » comprenant au moins un premier dispositif utilisateur de la pluralité de dispositifs utilisateurs et au moins un serveur, le serveur comprenant au moins un module de services géographiques,
- un deuxième réseau PMR « Professional Mobile Radio » comprenant au moins un deuxième dispositif utilisateur de la pluralité de dispositifs utilisateurs,
- un module d'interconnexion de réseaux reliant le premier réseau et le deuxième réseau implémentant une fonction d'interconnexion de réseau traduisant les requêtes entre le premier réseau et le deuxième réseau.

Outre les caractéristiques qui viennent d'être évoquées dans le paragraphe précédent, le système selon un aspect de l'invention peut présenter une ou plusieurs caractéristiques complémentaires parmi les suivantes, considérées individuellement ou selon toutes les combinaisons techniquement possibles :
- le premier réseau selon le standard 3GPP MCS est un réseau de troisième génération « 3G », de quatrième génération « 4G » ou de cinquième génération « 5G », dans lequel le premier dispositif utilisateur est un équipement utilisateur « UE », le premier réseau comprenant au moins un coeur de réseau et au moins un réseau d'accès radio « RAN ».
- le premier réseau selon le standard 3GPP MCS est un réseau de quatrième génération « 4G » ou de cinquième génération « 5G », le premier réseau comprenant au moins une station de base, le service étant annoncé :
   - en point à point pour chaque dispositif utilisateur du premier réseau ou
   - en point à multipoint grâce à une fonction « eMBMS » lorsque le réseau est de quatrième génération ou grâce à une fonction « 5MBS » lorsque le réseau est de cinquième génération, de manière à annoncer le service à une pluralité de dispositifs utilisateurs du premier réseau via un seul message envoyé par la au moins une station de base du premier réseau.

Selon un troisième aspect de l'invention, il est proposé un produit programme d'ordinateur comprenant des instructions qui conduisent le système selon l'invention à exécuter le procédé selon l'invention.

Selon un quatrième aspect de l'invention, il est proposé un support lisible par ordinateur, sur lequel est enregistré le programme d'ordinateur selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un système de l'art antérieur.
- La figure 2 montre une représentation schématique d'un système selon un premier mode de réalisation de l'invention.
- La figure 3 montre une représentation schématique d'un système selon un deuxième mode de réalisation de l'invention.
- La figure 4 montre une représentation schématique d'un procédé selon l'invention.

### DESCRIPTION DETAILLEE

Sauf précision contraire, un même élément apparaissant sur des figures différentes présente une référence unique.

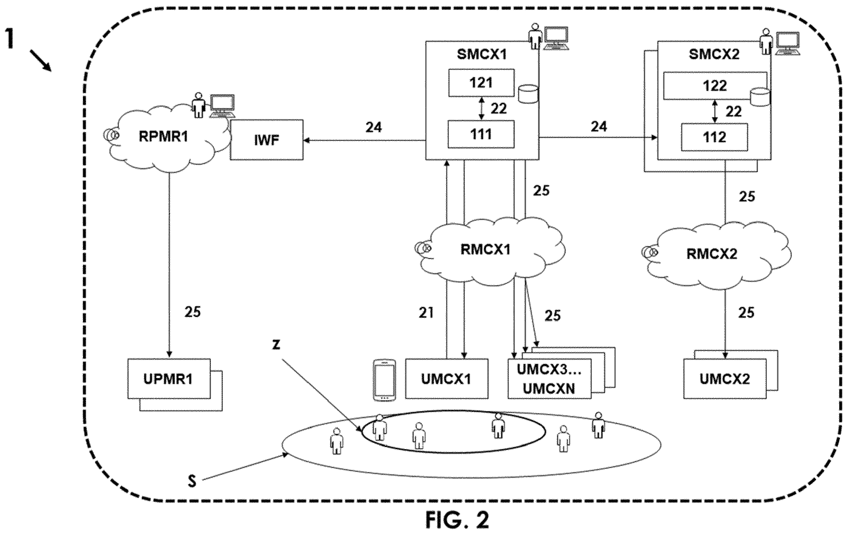

[Fig. 2] La figure 2 montre une représentation schématique d'un système selon l'invention. Le système 1 selon l'invention représenté à la Figure 2 comprend deux réseaux de communication selon le standard 3GPP MCS et un réseau de communication PMR, tel que décrit dans l'état de l'art.

On entend par « réseau de communication », un réseau permettant à des dispositifs utilisateurs qui y sont affiliés d'accéder à des services de communication, c'est-à-dire à des services liés à de la communication, par exemple l'accès à l'audio, à la vidéo ou encore à une messagerie avec fichiers pour interagir avec un ou plusieurs dispositifs utilisateurs. Les services de communication permettent par exemple d'établir des communications entre dispositifs utilisateurs ou des communications de groupe entre les dispositifs utilisateurs affiliés à un même groupe de communication.

On entend par « groupe de communication » un groupe virtuel regroupant plusieurs dispositifs utilisateurs pouvant interagir entre eux une fois autorisés par le réseau de communication, par exemple authentifiés à un serveur de gestion de groupe du réseau de communication, permettant ainsi l'accès au groupe de communication.

Chaque réseau de la Figure 2 comprend au moins un groupe de communication. L'invention couvre aussi le cas particulier dans lequel au moins un des réseaux comprend plusieurs groupes de communication.

Les réseaux de communication peuvent être fixes, par exemple un réseau de communication couvrant une entreprise, ou mobiles, par exemple tactiques, c'est-à-dire utilisés dans le cas d'une mission des forces spéciales.

Le système 1 comprend un réseau PMR RPMR1 et deux réseaux selon le standard 3GPP MCS RMCX1 et RMCX2. Le réseau PMR RPMR1 est relié au réseau RMCX1 via un module d'interconnexion IWF. Un tel module d'interconnexion est connu de l'homme du métier et est configuré pour assurer l'interconnexion des deux réseaux, en réalisant la traduction des requêtes et des messages transitant de l'un des réseaux vers l'autre. Un tel module d'interconnexion est par exemple de type IWF pour « InterWorking Function » tel que défini par le 3GPP et dans l'état de l'art de la présente demande. Les deux réseaux selon le standard 3GPP MCS RMCX1 et RMCX2 sont quant à eux reliés et communiquent via leurs serveurs MCX respectifs SMCX1 et SMCX2.

Le système 1 comprend une pluralité de dispositifs utilisateurs. Chaque dispositif utilisateur de la pluralité de dispositifs utilisateurs appartient à un des réseaux de communication RPMR1, RMCX1 ou RMCX2 du système 1. Un dispositif utilisateur appartient à un réseau de communication selon le standard 3GPP MCS lorsqu'il est géré par un serveur MCX du réseau et qu'il est configuré pour utiliser des services du réseau 3GPP MCS. Par exemple, le dispositif utilisateur UMCX2 appartient au réseau RMCX2 car il est géré par le serveur MCX SMCX2 qu'il est configuré pour utiliser des services MCX. Un dispositif utilisateur PMR appartient à un réseau PMR lorsqu'il est relié à une station de base d'un réseau PMR et qu'il est configuré pour utiliser des services du réseau PMR.

Chaque dispositif utilisateur UPMR1 et UMCX1 à UMCXN, aussi appelé équipement utilisateur (UE) ou entité cliente, est par exemple un smartphone, une tablette, un ordinateur portable ou tout autre dispositif, par exemple une clé 4G/5G, permettant de communiquer au sein d'un réseau. Un dispositif utilisateur comprend au moins une mémoire et au moins un processeur, la mémoire comprenant des instructions qui, lorsqu'elles sont exécutées par le processeur, conduisent l'équipement utilisateur à mettre en oeuvre les actions qui lui sont attribuées dans la suite de la description. Préférentiellement, les dispositifs utilisateur comprennent un module d'affichage. De la même manière, les différents serveurs MCX SMCX1 et SMCX2, sont des dispositifs comprenant au moins une mémoire et au moins un processeur, la mémoire comprenant des instructions qui, lorsqu'elles sont exécutées par le processeur, conduisent le serveur à mettre en oeuvre les actions qui lui sont attribuées dans la suite de la description. Les serveurs et les dispositifs utilisateurs sont reliés entre eux et forment des réseaux tel que ceux représentés à la Figure 2, ces réseaux mettant en oeuvre des communications filaires, sans fil, ou toute combinaison.

Chaque réseau selon le standard 3GPP MCS RMCX1 et RMCX2 du système 1 selon l'invention comprend au moins un serveur MCX. Les serveurs MCX respectivement des réseaux RMCX1 et RMCX2 sont nommés respectivement SMCX1 et SMCX2. Les réseaux RMCX1 et RMCX2 sont représentés par des nuages pour plus de clarté mais comprennent bien respectivement les serveurs MCX SMCX1 et SMCX2 et respectivement la pluralité de dispositif utilisateurs UMCX1, UMCX3-UMCXN pour le réseau RMCX1 et le dispositif utilisateur UMCX2 pour le réseau RMCX2.

Selon l'invention, chaque serveur MCX1 et MCX2 comprend, en plus du module de fourniture de services respectivement 111 et 112, un module de services géographiques, respectivement 121 et 122. Un tel module de services géographiques 121 et 122 est préférentiellement un module logiciel, exécuté par au moins un processeur du serveur MCX et stocké dans au moins une mémoire du serveur MCX ou dans une mémoire extérieure au serveur MCX atteignable par le serveur MCX via un réseau. Un module de services géographiques permet de fournir, aux dispositifs utilisateurs des réseaux MCX, des services géographiques, c'est-à-dire des services dépendant d'un critère géographique. Un exemple de service géographique est un appel de groupe restreint à une zone géographique donnée, ou encore une fonction de géo-fencing, traduit en français par « géo-clôture », par exemple pour surveiller les entrées et sorties d'une zone géographique, la zone géographique étant par exemple définie par un paramètre géographique stocké par le module de services géographiques et/ou le serveur MCX. Le paramètre géographique comprend alors une information de forme de zone géographique Z, une information de centre de la zone géographique Z et une information d'étendue de la zone géographique Z. La zone géographique Z est préférentiellement de forme polygonale ou ellipsoïdale, mais peut être de toute autre forme. Une information de centre de la zone géographique Z est par exemple de type coordonnées GPS (de l'anglais « Global Positioning System » pour « Système de Positionnement Global » en français). Une information d'étendue de la zone géographique Z est par exemple une distance ou une aire exprimée par une valeur. Le paramètre géographique peut être stocké, par exemple dans un document du serveur MCX, en tant qu'élément, comme défini dans le standard 3GPP MCS. Un tel élément de paramètre géographique peut par exemple prendre la forme suivante :

Un élément <GeoPerimeter> comprenant :
- Au moins un élément <LocationCriteria> comprenant :
   - un élément <PolygonArea> ou un élément <EllipsoidArcArea>

Un paramètre géographique est associé à au moins un service, définissant une zone géographique Z dans laquelle un dispositif utilisateurs de la pluralité de dispositifs utilisateurs du système 1 peut utiliser le service associé au paramètre géographique. L'invention ne porte pas sur la façon d'utiliser un service par les dispositifs utilisateurs lorsqu'ils sont dans la zone géographique Z, mais l'invention couvre toute action du dispositif utilisateur entrant ou situé dans la zone géographique Z liée au service associé au paramètre géographique définissant la zone géographique Z. L'invention porte sur la façon de déterminer les dispositifs utilisateurs cibles d'un service géographique et de fournir à ces dispositifs utilisateurs ce service. La façon dont ce service est utilisé par les dispositifs par la suite ne sera pas décrite pour plus de concision et de clarté, l'utilisation d'un service par un dispositif utilisateur lorsque ce service lui a été annoncé étant alors trivial et connu de l'homme du métier.

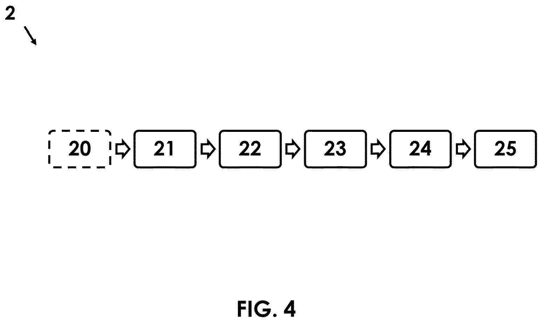

La Figure 4 montre une représentation schématique d'un procédé de fourniture de services géographiques selon l'invention. Le procédé 2 selon l'invention comprend plusieurs étapes, dont une étape préliminaire facultative.

L'étape 20 du procédé de fourniture de services est une étape préliminaire facultative. Dans cette étape 20 facultative, chaque dispositif utilisateur de chaque réseau MCX RMCX1 et RMCX2 transmet périodiquement au serveur MCX qui le gère sa position géographique. La position peut être récupérée par le dispositif utilisateur et ajoutée à un message périodique à destination du serveur MCX en utilisant un module de positionnement et/ou d'assistance au positionnement que le dispositif utilisateur comprend, par exemple un module GPS ou un module sans-fil tel qu'un module Wi-Fi^{®}. Un tel message périodique peut être de type SIP Message tel que décrit par le standard 3GPP MCS. L'étape 20 du procédé est réalisée périodiquement, et peut être mise en oeuvre parallèlement aux autres étapes du procédé 2, c'est-à-dire simultanément. Lorsque le serveur MCX reçoit un message périodique d'un des dispositifs utilisateurs qu'il gère, le serveur MCX stocke, soit dans une mémoire qu'il comprend, soit dans un moyen de stockage externe, la position du dispositif utilisateur associée à un identifiant du dispositif utilisateur. Ainsi, chaque serveur MCX SMCX1 et SMCX2 a accès à une base de données et/ou une mémoire stockant et comprenant les positions géographiques de tous les dispositifs utilisateurs qu'il gère. Alternativement, lorsque l'étape 20 n'est pas mise en oeuvre, chaque dispositif utilisateur MCX remonte sa position soit sur requête du serveur MCX qui le gère, soit concaténé à, en en-tête ou dans une partie des messages qu'il émet vers le serveur, ces messages n'étant pas dédiés à la position géographique du dispositif utilisateur. Dans les deux cas, c'est-à-dire en présence de messages dédiés à la position et en l'absence de ces messages, les dispositifs utilisateurs PMR ne remontent pas leur position car les services de communication PMR ont une connaissance fine de la position de chaque dispositif utilisateur PMR grâce à la couverture radio connue des stations de base du réseau PMR.

La suite du procédé 2 est décrite initiée par un dispositif utilisateur particulier. L'invention s'applique bien évidemment à tout dispositif utilisateur initiant le procédé 2. De la même façon, le procédé 2 est décrit avec le serveur SMCX1 comme serveur réceptionnant la requête de service du dispositif utilisateur initiant le procédé, mais le procédé s'applique de la même façon à tout serveur MCX de tout réseau selon le standard 3GPP MCS du système 1.

Le procédé 2 selon l'invention comprend une étape 21 de transmission, par un premier dispositif utilisateur de la pluralité de dispositifs utilisateurs à un premier serveur, d'au moins une requête de service comprenant la position géographique du premier dispositif utilisateur.

Dans un premier mode de réalisation représenté à la Figure 2, le premier dispositif utilisateur est un dispositif utilisateur MCX, c'est-à-dire rattaché à un réseau selon le standard 3GPP MCS. Dans l'exemple de la Figure 2, le dispositif utilisateur réalisant l'étape 21 est le dispositif utilisateur UMCX1 rattaché au réseau RMCX1. Dans toute mise en oeuvre du procédé 2, le premier serveur est un serveur MCX. Lorsque le dispositif utilisateur est un dispositif utilisateur MCX, le serveur auquel il transmet la requête de service géographique est le serveur MCX qui le gère. Dans l'exemple de la Figure 2, comme le dispositif utilisateur réalisant l'étape 21 est le dispositif utilisateur UMCX1, le serveur qui le gère et qui reçoit donc la requête de service géographique est le serveur SMCX1.

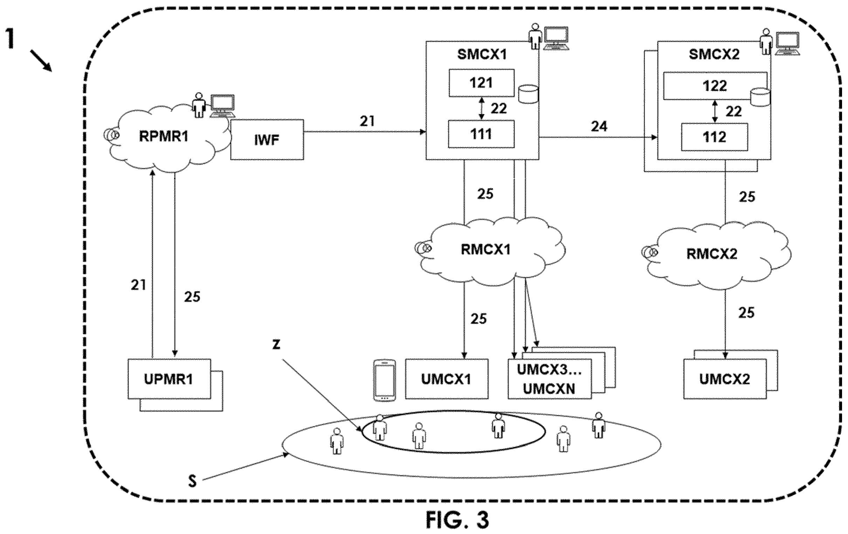

Dans un deuxième mode de réalisation représenté à la Figure 3, le premier dispositif utilisateur est un dispositif utilisateur PMR, c'est-à-dire rattaché à un réseau PMR. Dans l'exemple de la Figure 3, réalisant l'étape 21 le dispositif utilisateur UPMR1 rattaché au réseau RPMR1. Dans toute mise en oeuvre du procédé 2, le premier serveur est un serveur MCX. Dans ce deuxième mode de réalisation, l'étape 21 comprend alors la transmission de la requête de service géographique au premier serveur MCX via le module d'interconnexion IWF, tandis que dans le premier mode de réalisation le serveur MCX pouvait être atteint sans passer par le module d'interconnexion IWF. En effet, dans le deuxième mode de réalisation il est nécessaire d'atteindre un serveur MCX, avec lequel un dispositif utilisateur PMR ne sait pas communiquer en direct. Dans ce deuxième mode de réalisation, le premier serveur est le serveur MCX connecté au module d'interconnexion IWF, et la requête, émise par un dispositif utilisateur PMR, est transmise au premier serveur via le module d'interconnexion IWF. Dans l'exemple de la Figure 3, le premier dispositif utilisateur PMR est le dispositif utilisateur UPMR1 et le premier serveur est le serveur MCX SMCX1, connecté au module d'interconnexion IWF. Le module d'interconnexion IWF appartient à chacun des deux réseaux PMR et MCX.

La requête de service géographique de l'étape 21 comprend une information du service géographique requis et, préférentiellement mais de manière optionnelle, la position du dispositif utilisateur réalisant l'étape 21, c'est-à-dire dans l'exemple de la Figure 2 du dispositif utilisateur UMCX1 et dans l'exemple de la Figure 3 du dispositif utilisateur UPMR1. Un service géographique est un service lié à un critère géographique, par exemple une zone géographique. Dans l'invention, les dispositifs utilisateurs ont connaissance des services disponibles, par exemple en stockant des identifiants de ces services dans une mémoire interne, ou dans un moyen de stockage distant, en récupérant les services disponibles par exemple via une requête. Les dispositifs utilisateurs sont configurés pour remonter leur position périodiquement au serveur MCX et pour recevoir, du serveur MCX, des informations liées à un service à prendre en compte, par exemple des actions à exécuter.

La requête de service géographique émise par le premier dispositif utilisateur, MCX ou PMR, à l'étape 21 est une requête automatique ou manuelle. Lorsqu'elle est manuelle, c'est un utilisateur du dispositif utilisateur qui initie la requête et qui la transmet, par exemple en initiant un appel d'urgence lorsqu'une situation d'urgence se présente. Dans un tel cas, la requête émise par un dispositif utilisateur peut comprendre la localisation de l'équipement utilisateur à l'origine de l'appel de détresse. Cela permet de localiser l'équipement utilisateur à l'origine de l'appel de détresse et donc de localiser l'évènement. Le centre de la zone géographique Z est alors défini par la position du dispositif utilisateur émettant l'appel de détresse, et la taille et la forme de la zone sont définies dans une configuration géographique. Lorsqu'elle est automatique, c'est le dispositif utilisateur qui est configuré pour l'émettre lorsqu'un critère lié au logiciel ou au matériel du dispositif utilisateur est vérifié, par exemple après que l'utilisateur a appuyé sur un bouton de détresse, lorsque sa position vérifie un critère géographique, lorsque son niveau de batterie vérifie un critère de niveau de batterie, ou lorsque le dispositif utilisateur est affilié à un nouveau groupe de communication.

Le procédé 2 comprend une étape 22 de récupération, par le premier serveur MCX SMCX1, d'une configuration organisationnelle et d'une configuration géographique en fonction du service requis. Cette étape de récupération comprend :
- l'analyse de la requête de service géographique pour déterminer le service requis,
- l'envoi d'une requête auprès d'une base de données, par exemple accessible via un réseau, et la réception de la configuration organisationnelle et de la configuration géographique liées au service requis.

On entend par « configuration organisationnelle » l'ensemble des critères liés à l'organisation ou aux organisations auxquelles doivent ou ne doivent pas appartenir les dispositifs utilisateurs pour pouvoir utiliser le service requis. Par exemple, un type de service peut être limité à un niveau minimal dans une hiérarchie de l'organisation. Au contraire, la configuration organisationnelle peut définir que le service est utilisable par tout dispositif utilisateur, quelle que soit son organisation, ou seulement par une organisation en particulier, par exemple seulement par des pompiers. Un ensemble de critères comprend un ou plusieurs critères.

On entend par « configuration géographique » l'ensemble des critères géographiques liés au service requis. Par exemple, ces critères peuvent comprendre un paramètre géographique tel que défini précédemment, pour définir une zone géographique d'utilisation du service ou au contraire d'exclusion du service. Les critères géographiques peuvent comprendre des positions géographiques auxquelles il n'est pas possible d'utiliser le service, ou des positions géographiques auxquelles il est uniquement possible d'utiliser le service requis. Un ensemble de critères comprend un ou plusieurs critères.

La configuration géographique et la configuration organisationnelle sont stockées par exemple sous forme d'un ou plusieurs document(s), et peuvent être mises à jour à distance par exemple par un opérateur du système 1, ou par un dispositif utilisateur du système 1 via un serveur MCX du système 1.

Le procédé 2 comprend ensuite une étape 23 de détermination, par le module de services géographiques 121 du serveur SMCX1, des dispositifs utilisateurs concernés par le service requis en fonction de la configuration organisationnelle, de la configuration géographique et d'une position géographique de chaque dispositif utilisateur géré par le serveur SMCX1 . Ainsi, le module de services géographiques 121 du serveur SMCX1 récupère l'ensemble des positions de l'ensemble des dispositifs utilisateurs qu'il gère répondant aux critères compris dans la configuration organisationnelle, et vérifie si chaque dispositif utilisateur a une position vérifiant le(s) critère(s) géographique(s) de la configuration géographique. L'ensemble des positions de dispositifs utilisateurs qu'il gère est récupérée soit en mémoire interne, soit dans la base de données stockant les positions, la base de données et/ou la mémoire interne étant été remplies suite à l'envoi périodique de l'étape 20 et/ou l'envoi de la position dans les messages non dédiés à la position. L'appartenance de chaque dispositif utilisateur à une organisation est stockée, soit en mémoire interne du serveur MCX soit dans une base de données distante accessible via un réseau. Lorsqu'un dispositif utilisateur de la pluralité de dispositifs utilisateurs qu'il gère UMCX1, UMCX3-UMCXN, vérifie les critères et de la configuration organisationnelle et de la configuration géographique, le dispositif utilisateur est déterminé comme étant cible du service géographique. Lorsque le serveur MCX SMCX1 a déterminé l'ensemble des dispositifs utilisateurs vérifiant les critères et de la configuration organisationnelle et de la configuration géographique parmi les dispositifs utilisateurs UMCX1, UMCX3-UMCXN, l'étape suivante est réalisée.

Le procédé 2 comprend ensuite une étape 24 de transmission, par le serveur MCX SMCX1 à chaque autre réseau interconnecté au réseau RMCX1, de la requête de service géographique et de la configuration géographique. Lorsqu'un réseau interconnecté au réseau RMCX1 est un réseau PMR tel que le réseau RPMR1, le serveur SMCX1 transmet ces informations au réseau PMR via le module d'interconnexion IWF. Lorsqu'un réseau interconnecté au réseau RMCX1 est un autre réseau selon le standard 3GPP MCS tel que le réseau RMCX2, le serveur SMCX1 transmet ces informations au réseau RMCX2 au serveur SMCX2 du réseau RMCX2 interconnecté. La transmission des informations et leur propagation, qu'elle soit à un réseau PMR et/ou à un réseau selon le standard 3GPP MCS, est préférentiellement réalisée via un groupe de communication ad hoc, créé pour la transmission de ces informations. Ce groupe de communication ad hoc peut être un groupe de communication global regroupant plusieurs groupes de communication, par exemple un groupe de communication pour chaque réseau interconnecté, entre le réseau interconnecté et le réseau RMCX1.

Chaque serveur MCX recevant la requête de service géographique et la configuration géographique met en oeuvre les étapes 22, 23 et 24 du procédé 2, c'est-à-dire que chaque serveur MCX recevant ces informations, par exemple le serveur SMCX2, récupère dans une étape 22 une configuration organisationnelle liée au service et propre à son réseau RMCX2, détermine à l'étape 23 les dispositifs utilisateurs cibles du service géographique parmi les dispositifs utilisateurs qu'il gère, c'est-à-dire parmi le dispositif utilisateur UMCX2, et propage à l'étape 24 la requête de service géographique et la configuration géographique vers certains autre réseaux interconnectés à lui. Les réseaux interconnectés au réseau RMCX2 auxquels la requête est propagée sont déterminés par configuration du serveur SMCX2, par exemple sous la forme d'un fichier de configuration stocké par le serveur SMCX2. Cette configuration peut n'identifier aucun réseau interconnecté auquel propager la requête, ou peut en identifier un ou plusieurs. Ainsi, la requête de service géographique et la configuration géographique sont propagées de réseau interconnecté en réseau interconnecté, pour atteindre le maximum de dispositifs utilisateurs présents dans la zone géographique z définie par la configuration géographique liée au service géographique requis.

Le procédé 2 comprend ensuite une étape 25 d'annonce du service requis à chaque dispositif utilisateur dont la position géographique vérifie la configuration géographique. Cette annonce est réalisée par le serveur de chaque réseau selon le standard 3GPP MCS pour les réseaux selon le standard 3GPP MCS et à chaque dispositif utilisateur déterminé par le module de services géographiques comme replissant les critères de la configuration géographique et de la configuration organisationnelle. Un réseau 4G ou 5G selon le standard 3GPP MCS a la capacité d'annoncer le service en point à point (en unicast) pour chaque dispositif utilisateur ou en point à multipoints (en broadcast) en s'appuyant sur la fonction « eMBMS » en 4G ou « 5MBS » (5G Multicast Broadcast) en 5G de manière à atteindre un ensemble de dispositifs utilisateurs via un seul message envoyé par une station de base du réseau. Pour les réseaux PMR, cette annonce est réalisée par la station de base de chaque réseau PMR servant la zone géographique, aux dispositifs utilisateurs présents dans la zone géographique définie par la configuration géographique et d'une configuration organisationnelle propre au réseau PMR. Par exemple, lorsque le service géographique est un appel de groupe lié à la position d'un utilisateur et à une zone géographique z, chaque dispositif utilisateur présent dans la zone géographique z et vérifiant la configuration organisationnelle recevra, du serveur qui le gère ou de la station de base à laquelle il est rattaché, une annonce de disponibilité du service. Lorsque le service disponible est un appel de groupe, le dispositif utilisateur est affilié au groupe de communication car il est entré dans la zone géographique Z définie par la configuration géographique, ou car il était dans cette zone lors de l'annonce du service géographique. La surveillance de l'entrée ou de la sortie de dispositifs utilisateurs dans la zone géographique Z ne fait pas partie de la présente invention, mais la présente invention permet d'annoncer un service lorsque ces évènements surviennent.

Lorsque le service géographique est un appel de groupe, l'affiliation du dispositif utilisateur au groupe de communication peut être une affiliation implicite comme le permet le standard 3GPP MCS, c'est-à-dire en étant affilié de manière contrainte par le système 1. L'affiliation peut aussi être réalisée à la discrétion d'un utilisateur du dispositif utilisateur, par exemple par affichage sur un écran du dispositif utilisateur. Le dispositif utilisateur peut aussi décider de s'affilier ou non au groupe de communication indiqué dans l'annonce de service géographique reçue, lorsque l'affiliation ne lui est pas contrainte et qu'il n'est pas configuré pour interroger son utilisateur via un écran, en mettant en oeuvre, par exemple par un processeur du dispositif utilisateur, un procédé enregistré en mémoire du dispositif utilisateur.

Le module de services géographiques permet de créer une zone de service. Par exemple, lorsqu'un dispositif utilisateur entre dans cette zone, son utilisateur peut être notifié d'un service disponible dans cette zone, par exemple une communication de groupe.

L'invention couvre aussi les actions contraires, c'est-à-dire la désaffiliation d'un dispositif utilisateur sortant de la zone géographique Z. La désaffiliation est réalisée de la même manière que l'affiliation, à l'exception que le dispositif utilisateur n'a pas le choix de se désaffilier ou non. La désaffiliation est imposée par le serveur surveillant les entrées et sorties de la zone géographique Z et doit alors être mise en oeuvre par le dispositif utilisateur sortant de la zone géographique Z.

## Revendications

1. Procédé (2) de fourniture de services géographiques dans un système (1) comprenant au moins une pluralité de dispositifs utilisateurs (UPMR1, UMCX1, UMCX2, UMCX3, ... UMCXN) et :
- un premier réseau selon le standard 3GPP MCS « 3rd Génération Partnership Project Mission Critical Services » (RMCX1) comprenant au moins un premier dispositif utilisateur (UMCX1) de la pluralité de dispositifs utilisateurs (UPMR1, UMCX1, UMCX2, UMCX3, ... UMCXN) et au moins un serveur (SMCX1), le serveur (SMCX1) comprenant au moins un module de services géographiques (121,122),
- un deuxième réseau PMR « Professional Mobile Radio » (RPMR1) comprenant au moins un deuxième dispositif utilisateur (UPMR1) de la pluralité de dispositifs utilisateurs (UPMR1, UMCX1, UMCX2, UMCX3, ... UMCXN),
- un module d'interconnexion de réseaux (IWF) reliant le premier réseau (RMCX1) via le serveur (SMCX1) avec le deuxième réseau (RPMR1) implémentant une fonction d'interconnexion de réseau traduisant les requêtes entre le premier réseau (RMCX1) et le deuxième réseau (RPMR1),
Le procédé (2) comprenant au moins les étapes de :
- Transmission (21), par un dispositif utilisateur (UMCX1, UPMR1) de la pluralité de dispositifs utilisateurs (UPMR1, UMCX1, UMCX2, UMCX3, ... UMCXN) au premier serveur (SMCX1), d'au moins une requête de service géographique comprenant la position géographique du dispositif utilisateur (UMCX1, UPMR1),
- Récupération (22), par le serveur (SMCX1), d'une configuration organisationnelle et d'une configuration géographique en fonction du service requis,
- Détermination (23), par le module de services géographiques (121) du serveur (SMCX1), des dispositifs utilisateurs concernés par le service requis en fonction de la configuration organisationnelle, de la configuration géographique et d'une position géographique de chaque dispositif utilisateur géré par le serveur (SMCX1),
- Transmission (24), par le serveur (SMCX1) à chaque autre réseau (RPMR1, RMCX2) interconnecté au premier réseau (RMCX1) et auquel n'appartient pas le dispositif utilisateur ayant transmis (21) la requête de service géographique, de la requête de service géographique et de la configuration géographique,
- Annonce (25) du service requis à chaque dispositif utilisateur dont la position géographique est comprise dans une zone géographique (z) définie par la configuration géographique.

2. Procédé (2) selon la revendication précédente dans lequel la transmission (21), par un dispositif utilisateur (UMCX1, UPMR1) de la pluralité de dispositifs utilisateurs (UPMR1, UMCX1, UMCX2, UMCX3, ... UMCXN) au premier serveur (SMCX1), d'au moins une requête de service géographique comprenant la position géographique du premier dispositif utilisateur (UMCX1, UPMR1) est réalisée :
- Pour un réseau selon le standard 3GPP MCS (RMCX2) interconnecté au premier réseau (RMCX1), via le serveur (SMCX2) du réseau interconnecté, ou
- Pour un réseau PMR (RPMR1) interconnecté au premier réseau (RMCX1), via le module d'interconnexion (IWF).

3. Procédé (2) selon l'une des revendications précédentes dans lequel la détermination (23), par le module de services géographiques (121), des dispositifs utilisateurs concernés par le service requis, comprend :
- la comparaison d'une position géographique de chaque dispositif utilisateur stockée par le serveur (SMCX1) avec la configuration géographique et
- la comparaison d'une appartenance à une organisation de chaque dispositif utilisateur stockée par le serveur (SMCX1) avec la configuration organisationnelle liée au service requis.

4. Procédé (2) selon l'une des revendications précédentes dans lequel au moins un troisième réseau (RMCX2) est interconnecté au premier réseau (RMCX1), le troisième réseau (RMCX2) étant un réseau selon le standard 3GPP MCS et comprenant au moins un deuxième serveur (SMCX2) comprenant au moins un deuxième module de services géographiques (122) et au moins un troisième dispositif utilisateur (UMCX2).

5. Procédé (2) selon l'une des revendications précédentes comprenant une étape préalable (20) de transmission périodique, par chaque dispositif utilisateur (UMCX1, UMCX2, UMCX3, ... UMCXN) de chaque réseau 3GPP MCS (RMCX1, RMCX2), au serveur (SMCX1, SMCX2) du réseau 3GPP MCS, d'au moins une position géographique du dispositif utilisateur (UMCX1, UMCX2, UMCX3, ... UMCXN).

6. Procédé (2) selon l'une des revendications précédentes dans lequel le service géographique est choisi au moins parmi les services de : communication de groupe de type voix, vidéo et/ou de données, communication « appuyer pour parler », communication vidéo, communication texte, message de détresse, appel de groupe d'urgence.

7. Procédé (2) selon l'une quelconque des revendications précédentes dans lequel la transmission (24), par le serveur (SMCX1) à chaque autre réseau (RMCX2, RPMPR1) interconnecté au premier réseau (RMCX1), de la requête de service géographique et de la configuration géographique, est réalisée via au moins un groupe de communication dédié entre le serveur (SMCX1) du premier réseau (RMCX1) et :
- Pour un réseau selon le standard 3GPP MCS interconnecté (RMCX2), le serveur du réseau interconnecté (SMCX2), ou
- Pour un réseau PMR interconnecté (RPMPR1), le module d'interconnexion (IWF).

8. Procédé (2) selon l'une des revendications précédentes dans lequel l'annonce (25) du service est réalisée :
- par une station de base de chaque réseau PMR servant la zone géographique (z), aux dispositifs utilisateurs présents dans la zone géographique (z) et
- par le serveur (SMCX1, SMCX2) de chaque réseau (RMCX1 , RMCX2) selon le standard 3GPP MCS, aux dispositifs utilisateurs déterminés par le module de services géographiques (121).

9. Procédé (2) selon l'une des revendications précédentes dans lequel la récupération (22) de la configuration organisationnelle et de la configuration géographique en fonction du service requis comprend :
- l'envoi d'une requête, par le serveur (SMCX1), à une base de données, la requête comprenant le service requis,
- la réception, par le serveur (SMCX1), de la configuration organisationnelle et de la configuration géographique.

10. Système (1) configuré pour mettre en oeuvre le procédé (2) selon l'une des revendications précédentes, le système comprenant au moins une pluralité de dispositifs utilisateurs (UPMR1, UMCX1, UMCX2, UMCX3, ... UMCXN) et :
- un premier réseau selon le standard 3GPP MCS « 3rd Génération Partnership Project Mission Critical Services » (RMCX1) comprenant au moins un premier dispositif utilisateur (UMCX1) de la pluralité de dispositifs utilisateurs (UPMR1, UMCX1, UMCX2, UMCX3, ... UMCXN) et au moins un serveur (SMCX1), le serveur (SMCX1) comprenant au moins un module de services géographiques (121,122),
- un deuxième réseau PMR « Professional Mobile Radio » (RPMR1) comprenant au moins un deuxième dispositif utilisateur (UPMR1) de la pluralité de dispositifs utilisateurs (UPMR1, UMCX1, UMCX2, UMCX3, ... UMCXN),
- un module d'interconnexion de réseaux (IWF) reliant le premier réseau (RMCX1) et le deuxième réseau (RPMR1) implémentant une fonction d'interconnexion de réseau traduisant les requêtes entre le premier réseau (RMCX1) et le deuxième réseau (RPMR1).

11. Système (1) selon la revendication précédente dans lequel le premier réseau selon le standard 3GPP MCS est un réseau de troisième génération « 3G », de quatrième génération « 4G » ou de cinquième génération « 5G », dans lequel le premier dispositif utilisateur est un équipement utilisateur « UE », le premier réseau comprenant au moins un coeur de réseau et au moins un réseau d'accès radio « RAN ».

12. Système (1) selon la revendication précédente dans lequel le premier réseau selon le standard 3GPP MCS est un réseau de quatrième génération « 4G » ou de cinquième génération « 5G », le premier réseau comprenant au moins une station de base, le service étant annoncé :
- en point à point pour chaque dispositif utilisateur du premier réseau ou
- en point à multipoint grâce à une fonction « eMBMS » lorsque le réseau est de quatrième génération ou grâce à une fonction « 5MBS » lorsque le réseau est de cinquième génération, de manière à annoncer le service à une pluralité de dispositifs utilisateurs du premier réseau via un seul message envoyé par la au moins une station de base du premier réseau.

13. Programme d'ordinateur comprenant des instructions de code de programme pour l'exécution des étapes du procédé (2) selon l'une des revendications 1 à 9 lorsque ledit programme est exécuté sur un ordinateur.

14. Support lisible par ordinateur, sur lequel est enregistré le programme d'ordinateur selon la revendication 13.
